# EUROPÄISCHE PATENTSCHRIFT

(11) **EP 0 184 788 B1**
(45) Veröffentlichungstag und Bekanntmachung des Hinweises auf die Patenterteilung: **10.08.1988**
(21) Anmeldenummer: 85115548.1
(22) Anmeldetag: 06.12.1985
(51) Int. Cl.: C08K 5/18, C08K 5/13, C08L 55/02

(54) **Selbstverlöschende thermoplastische Formmasse**
Self-extinguishible thermoplastic moulding mass
Masse de moulage thermoplastique auto-extinguible

(30) Priorität: 13.12.1984 DE 3445413
(43) Veröffentlichungstag der Anmeldung: 18.06.1986
(73) Patentinhaber: BASF Aktiengesellschaft, 67063 Ludwigshafen (DE)
(72) Erfinder: Muench, Volker, Dr., D-6700 Ludwigshafen (DE); Echte, Adolf, Dr., D-6700 Ludwigshafen (DE); Hambrecht, Juergen, Dr., D-6900 Heidelberg (DE)

(56) Entgegenhaltungen:
- DE-A- 1 802 432
- FR-A- 2 459 264

## Beschreibung

Die Erfindung betrifft eine selbstverlöschende thermoplastische Formmasse auf Basis von ABS, die eine Halogen enthaltende organische Verbindung als Flammschutzmittel und einen Synergisten für das Flammschutzmittel aufweist.

Die Flammfestausrüstung von Thermoplasten ist in Standardwerken wie

Vogel, "Flammfestmachen von Kunststoffen", Hüthig-Verlag (1966), Seiten 94 bis 102;

Troitzsch, "Brandverhaften von Kunststoffen", Hanser-Verlag (1982), Seiten 1 bis 65;

Hirschler, in "Developments in Polymer Stabilization", Band 5, Editor G. Scott, Applied Science Publishers, London (1982), Seiten 107 bis 151;

beschrieben.

Zum Stand der Technik nennen wir
(1) DE-A-30 25 139 und
(2) DE-A-24 01 834.

Wenn man selbstverlöschende thermoplastische Formmassen auf der Basis von ABS herstellt, so zeigen diese Formmassen wesentliche Nachteile, die einer Anwendung entgegenstehen und vom Verarbeiter zumeist nicht toleriert werden. Charakteristisch für eine Gruppe bekannter Flammschutzmittel ist, daß sie oftmals eine drastische Senkung der Wärmeformbeständigkeit bewirken und ausblühen, daß aber dabei das mechanische Eigenschaftsprofil des Poliymren nur unwesentlich geändert wird. Andere bekannte Flammschutzmittel bewirken keine Änderung der Wärmeformbeständigkeit; sie schädigen aber die mechanischen Eigenschaften in nicht tolerierbarem Maße. Häufig blühen solche Flammschutzmittel nicht aus, dieser Vorteil kompensiert jedoch nicht die angeführten schwerwiegenden Nachteile.

Weiterhin ist bekannt, daß durch die Zugabe eines Synergisten die Menge der Flammschutzmittel verringert werden kann, ohne daß die Eigenschaft des Selbstverlöschens verloren geht. Solchermaßen ausgerüstete Formmassen zeigen Nachteile, die vom Verarbeiter meist nicht toleriert werden. Charakteristisch sind z. B. die Verfärbung der Formmasse sowie die Korrosion von Verarbeitungsmaschinen, wenn Kombinationen von halogenhaftigen Flammschutzmitteln und Synergisten eingesetzt werden.

Es ist deshalb schon versucht worden, halogenhaltige Flammschutzmittel und die dazugehörigen Synergisten in thermoplastischen Werkstoffen durch andere flammhemmende Substanzen ganz oder teilweise zu ersetzen. Dies ist z. B. in (1) mit Hilfe von halogenfreien Kohlenwasserstoff/Formaldehyd-Harzen versucht worden. In (2) ist die Verwendung von Novolaken (Phenol-/Aldehyd-Harzen) für diesen Zweck beschrieben.

Die in (2) beschriebenen Mittel bewirken zwar eine Absenkung der zum Erreichen der Einstufung UL 94 VO notwendigen Bromflammschutzmittelmengen C):und verhindern effektiv das brennende und nicht brennende Abtropfen. Sie besitzen aber wiederum spezifische Nachteile, so lassen sie Wünsche hinsichtlich der Wärmeformbeständigkeit, Kerbschlagzähigkeit und multiaxialen Belastbarkeit offen.

Es bestand daher weiter die Aufgabe, die Menge an Halogen enthaltenden Flammschutzmitteln und Synergisten in durch Flammschutzmittel/Synergist-Kombinationen flammfest ausgerüstetem ABS zu verringern, ohne daß die Formmasse die Einstufung UL 94 V1 oder UL 94 VO verfehlt. Gleichzeitig sollte das Abtropfen der Mischung beim Beflammen und beim Nachbrennen verhindert werden. Zusätzlich sollten aber die neuen Formmassen ein im Vergleich zum Stand der Technik verbessertes thermisches und mechanisches Eigenschaftsprofil aufweisen, d.h. die thermoplastische Formmasse soll ein insgesamt ausgewogenes Eigenschaftsprofil besitzen.

Es ist ferner bekannt, daß zur Stabilisierung von thermoplastischen Harzmassen sogenannte Antioxidantien oder Stabilisatoren eingesetzt werden, z. B. aus der Klasse der sterisch gehinderten Phenole, der Phosphite, der Diphenylamine, der Phenylendiamine, der sterisch gehinderten Amine und dgl.

Die genannten Verbindungen sind in der Lage, thermoplastische Harze bei der Verarbeitung bei höheren Temperaturen vor dem thermischen und thermooxidativen Abbau zu schützen. Die Verbindungen werden zu diesem Zweck üblicherweise in Mengen von 0,001 bis 2 Gew.-%, bezogen auf die Harzmischung, eingesetzt.

Da diese Verbindungen kein Halogen enthalten, sind sie sehr leicht brennbar. Bei einer Verwendung derartiger Stabilisatoren und Antioxydantien in größeren Mengen war daher zu befürchten, daß das Brandverhalten und die mechanischen Eigenschaften der Formmasse sich drastisch verschlechtern. Dies ist überraschenderweise nicht der Fall, so daß mit Hilfe dieser Verbindungen die Lösung der Aufgabe gelingt.

Diese Aufgabe wird somit gelöst durch eine thermoplastische Formmasse, gemäß Patentanspruch 1.

Nachstehend wird der Aufbau der erfindungsgemäßen Formmassen aus den Komponenten beschrieben.

Im Aufbau der erfindungsgemäßen Formmassen sind die Komponenten A), B), C) und D) obligatorisch beteiligt. Die Fommasse kann außerdem übliche Zusatzstoffe (Komponente E) aufweisen.

Die Formmase enthält, bezogen auf jeweils 100 Gew.-Teile der Komponente A),
2 bis 20 Gew.-Teile, vorzugsweise 6 bis 16 Gew.-Teile, insbesondere 8 bis 15 Gew.-Teile der Komponente B) (Flammschutzm itte I) sowie
0,5 bis 20 Gew.-Teile, vorzugsweise 1 bis 10 Gew.-Teile, Insbesondere 2 bis 7 Gew.-Teile der Komponente C) (Synergist),
5 bis 20 Gew.-Teile, vorzgusweise 7 bis 16 Gew.-Teile der Komponente D) (halogenfreies Flammschutzmittel) und; falls angewendet,
0,001 bis 40 Gew.-Teile, vorzugsweise 0,1 bis 30 Gew.-Teile der Komponente E) (Zusatzstoffe).

### Komponente A)

Der Aufbau der Komponente A) der Formmasse ist dreiteilig. Die Komponente A) der erfindungsgemäßen Formmasse weist als Komponente aᵢ), ein Elastomeres, in einem Anteil von 1 bis 40 Gew.-%, insbesondere von 10 bis 30 Gew.-%, jeweils bezogen auf A) auf. Auf diesem Elastomeren, d.h. einem Kautschuk, der eine Glastemperatur unterhalb von 0°C, insbesondere unterhalb von -30°C aufweist, ist ein Copolymerisat a₂) aufgepfropft, das einen Anteil von 5 bis 40 Gew.-%, insbesondere von 5 bis 30 Gew.-%, jeweils bezogen auf A), ausmacht. Die Summe aus a₁) und a₂), im nachfolgenden Text auch gelegentlich als Pfropfmischpolymerisat, d.h. als Ergebnis der Pfropfung bezeichnet, macht noch nicht die gesamte Komponente A) aus. Die Komponente A) enthält zusätzlich zu den Komponenten a₁) und a₂) noch mindestens ein Copolymerisat a3) (Hartmatrix) in einem Anteil von 20 bis 94 Gew.-%, insbesondere von 40 bis 85 Gew.-%, jeweils bezogen auf A). Dieses Copolymerisat stellt die Hartmatrix der Formmasse dar, in der das Pfropfmischpolymerisat gleichmäßig verteilt ist.

Nachstehend wird der Aufbau der Komponente a₁) bis a₃) des Mischpolymerisates A) beschreiben.

### Aufbau von a₁)

Das Elastomere a₁) ist aufgebaut aus Polymerisaten konjugierter Diene, insbesondere von Butadien-1,3. Es soll eine Glastemperatur (nach K.H. lllers und H. Breuer, Kolloid-Zeitschrift 176 (1961), Seite 110) haben, die unter 0°C liegt.

### Aufbau von a₂)

Das Copolymersat a₂), d.h. die Pfropfhülle, ist aufgebaut aus mindestens je einem Monomeren aus zwei unterschiedlichen Gruppen.

Die erste Gruppe stellt vinylaromatische Monomere mit 8 bis 9 C-Atomen dar, insbesondere kommen hierbei in Betracht das Styrol, sowie die Alkylderivate, von denen das a-Methylstyrol bzw. p-Methylstyrol hervorgehoben seien. Besonders bevorzugt wird das Styrol angewendet. Um wärmeformbeständigere Massen zu erhalten, können Mischungen aus Styrol und dessen Alkylderivaten oder ausschließlich das a-Methylstyrol und insbesondere das p-Methylstyrol angewendet werden.

Die zweite Komponente für den Aufbau des Copolymerisates a₂) stellt ein (nichtaromatisches) ethylenisch ungsättigtes Monomeres dar. Als solche (nichtaromatische) ethylenisch ungesättigte Monomere kommen ins besondere die Derivate der Acrylsäure und Methacrylsäur in Betracht. Genannt seien die Ester der Acrylsäure und der Methacrylsäure mit 1 bis 8 C-Atomen im Alkylrest sowie das Acrylnitril und das Methacrylnitril. Bevorzugt wird das (Meth)acrylnitril verwendet. Die vorstehend genannten vinylaromatischen Monomeren werden im Gewichtsverhältnis von 60 : 40 bis 90 : 10 angewendet. Das Ergebnis der Herstellung des Copolymerisates in Gegenwart des Elastomeren a₁) ist ein Pfropfmischpolymerisat, bei der das Copolymerisat in dem Fachmann bekannten Grenzen auf das Elastomere gepfropft wird. Die Herstellung der Pfropfhülle kann dabei gegebenenfalls in 2 Stufen erfolgen, wobei in der ersten Stufe der Pfropfung 5 bis 50 Gew.-%, vorzugsweise 20 bis 40 Gew.-% lediglich des vinylaromatischen Monomeren und in der zweiten Stufe die restliche Menge des vinylaromatischen Monomeren und die Gesamtmenge des (nichtaromatischen) ethylenisch ungesättigten Monomeren, d.h. 30 bis 100 Gew.-%, angewendet werden.

Das Copolymerisat a₂) soll unabhängig davon, ob es in ein oder zwei Stufen hergestellt wird, etwa 90 bis 60 Gew.-% vinylaromatische Monomere und 40 bis 10 Gew.-% (nichtaromatische) ethylenisch ungesättigte Monomere, jeweils bezogen auf a2), aufweisen. Bevorzugt ist die Pfropfhülle aus 80 bis 65 Gew.-% Styrol und 20 bis 35 Gew.-% AN aufgebaut.

Sowohl das Elastomere als auch das Pfropfmischpolymerisat werden bevorzugt in Emulsion hergestellt, und können nach den üblichen Methoden einer Teilchenvergrößerung unterzogen werden. Das Pfropfmischpolymerisat soll Teilchen im Bereich von 0,2 bis 10 µm (dso-Wert der integralen Masseverteilung) aufweisen.

### Aufbau von a₃)

Die Komponente a₃), das Copolymerisat, ist eine nicht elastomere Hartkomponente, die aus mindestens einem vinylaromatischen Monomeren mit 8 bis 9 C-Atomen und mindestens einem (nichtaromatischen) ethylenisch ungesättigten Monomeren aufgebaut ist.

Als vinylaromatische Monomere, die in einer Menge von 50 bis 90 Gew.-%, insbesondere von 65 bis 80 Gew.-%, bezogen auf a₃), angewendet werden, kommen in Betracht: Styrol und seine Derivate, insbesondere die Alkylderivate, wie a-Methylstyrol bzw. p-Methylstyrol. Bevorzugt werden das Styrol und falls wärmeformbeständigere Formmassen angestrebt werden, dessen Alkylderivate angewendet.

Das nicht aromatische ethylenisch ungesättigte Monomere wird in einer Menge von 50 bis 10 Gew.-%, insbesondere von 35 bis 20 Gew.-%, bezogen auf a₃), angewendet. Als Monomere kommen in Betracht die Derivate der Acryl- und Methacrylsäure, insbesondere die Ester von Alkoholen mit 1 bis 8 C-Atomen im Alkylrest, sowie die Nitrile. Von den Nitrilen ist das Acrylnitril bevorzugt.

Die bevorzugt als a₃) verwendeten StyrollAcrylnitril-Copolymerisate sind im Handel erhältlich und können z. B. nach der Lehre der DE-AS-10 01 001 bzw. DE-PS-1 003 436 hergestellt werden. Der Molekulargewichtsbereich C):der Copolymerisate kann M_{w} =10⁵ bis M_{w} =10⁵ (Gewichtsmittel Mw aus Lichtstreuung) betragen).

Die Herstellung des Pfropfmischpolymerisates ist an sich bekannt.

Das Pfropfmischpolymerisat kann im Handel bezogen werden oder es kann beispielsweise nach der in der DE-PS-1 260135 beschriebenen Methode hergestellt werden.

Als Pfropfmischpolymerisat (a₁ + a₂) kommen somit z. B. in Frage:
1. 75 % Polybutadienkautschuk gepfropft mit 25 % Styrol/Acrylnitril im Verhältnis (90/10)
2. 75 % Polybutadienkautschuk gepfropft mit 25 % Styrol/Acrylnitril im Verhältnis (83/17)
3. 75 % Polybutadienkautschuk gepfropft mit 25 % Styrol/Acrylnitril im Verhältnis (75/25)
4. 75 % Polybutadienkautschuk gepfropft mit 25 % Styrol/Acrylnitril im Verhältnis (70/30)
5. 75 % Polybutadienkautschuk gepfropft mit 25 % Styrol/Acrylnitril im Verhältnis (65/10)

In den erfindungsgemäßen Formmassen besonders bevorzugt eingesetzte Mischungen aus den Komponenten a₃) und a₁) + a₂) sind demnach Acrylnitril-Butadien-Styrol-Copolymerisate (ABS).

### Komponente B)

Als Flammschutzmittel, Komponente B) der erfindungsgemäßen Formmasse, kommen übliche halogen enthaltende organische Verbindungen in Betracht. Geeignete Flammschutzmittel sind: Octabromhexadecan, chlorierte Paraffine, die etwa 70 Gew.-% Chlor enthalten, halogenhaltige Diels-Alder-Addukte und halogenhaltige Diphenyle.

Für besondere Zwecke, nämlich um Ausblühungen vermeiden zu können, werden die kernhalogenierten Styrol-Oligomere, die 40 bis 80 Gew.-% Halogen enthalten und einen mittleren Polymerisationsgrad von 3 bis 200 aufweisen, angewendet. Deren Herstellung ist z. B. aus der DE-OS-25 37 385 bekannt.

Bevorzugt werden allgemein die organischen Bromverbindungen und hiervon die Bis(tribromphenoxy)-alkylene (vgl. DE-OS-23 28 517), hiervon insbesondere das Bis(tribromphenoxy)-ethan (= bz), sowie die Okta-, Nona- und Decabromdiphenyle bzw. die entsprechenden Diphenylether (= b₁) und Tetrabrombisphenol-A (= b₃). Besonders bevorzugt sind Gemische aus Diphenylethern, die z. B. in der GB-PS-1 158 163 oder in der DE-AS-20 46 795 beschrieben sind und die im Handel angeboten werden.

Die genannten Flammschutzmittel können einzeln oder auch in Mischungen untereinander angewendet werden. Innerhalb des genannten Bereiches kann der für den jeweils verwendeten Thermoplasten günstigste Wert ohne weiteres vom Fachmann ermittelt werden.

Ganz besonders bevorzugt eingesetzt wird ein Diphenylethergemisch, dessen Summenformel einem Octabromdiphenylether (= bᵢ) entspricht.

### Komponente C)

Als Synergisten für die Halogen enthaltenden Flammschutzmittel in den erfindungsgemäßen Formmasen kommen vor allem Metallverbindung wie A_{S2}0₃, Sb₂O₃, Bi₂0₃, Sn0₂, Fe₂0₃, Ferrocen, Al₂O₃, ZnO und deren Gemische sowie Nichtmetallverbindugen wie Hypophosphite und Borate in Frage. Bevorzugt eingesetzt wird Sb₂0₃ (= ci).

### Komponente D)

Bei der Komponente D) handelt es sich um im Handel erhältliche Antioxydantien und Stabilisatoren, ausgewählt aus den Klassen der sterisch gehinderten Phenole und der Phenylendiamine, so wie sie beispielsweise in K. Schwarzenbach, "Kunststoffadditive", 2. Ausgabe, Editoren R. Gächter und H. Müller, Hanser-Verlag, München, 1983, eingehend beschrieben werden. Üblicherweise eingesetzte phenolische Antioxidantien zeichnen sich vor allem durch ein 2,6- oder 2,4-Alkylsubstitutionsmuster am phenolischen Benzolkern aus. Vorzugsweise werden (zumindest eine) tertiäre Butylgruppe als Substituent eingesetzt. Charakteristische Beispiele für phenolische Antioxidantien sind, ohne eine Einschränkung damit zu treffen, die Verbindungen (I) bis (V).

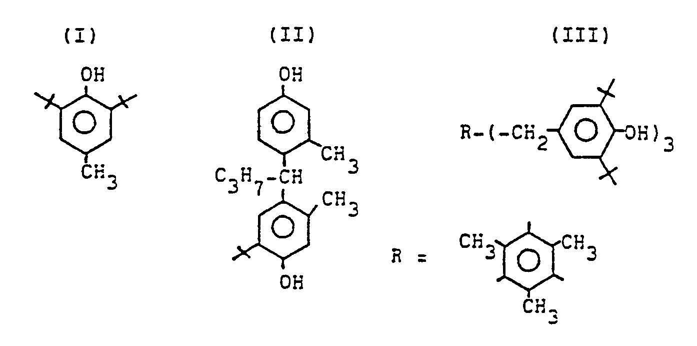

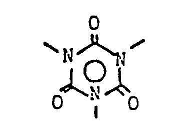

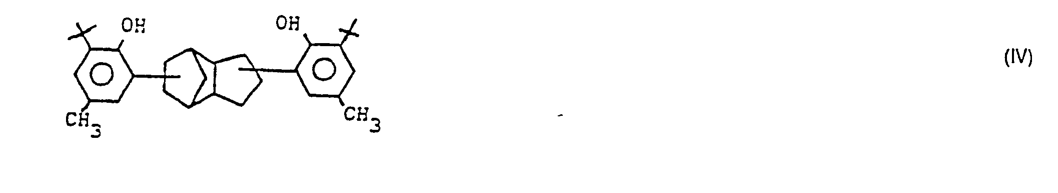

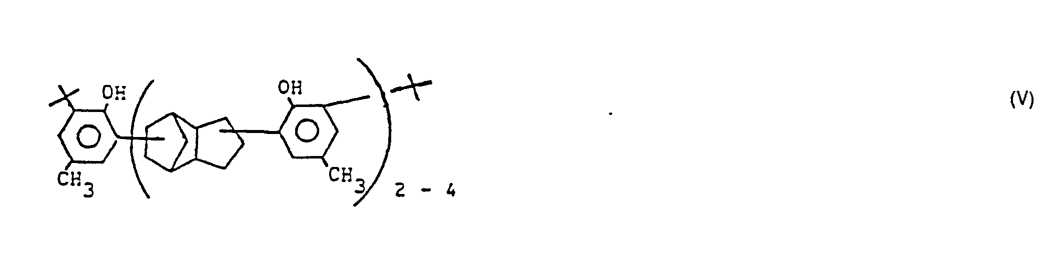

Das Gemisch der Verbindungen (IV) und (V) wird von Goodyear unter dem Namen Wingstay L^{(R)} (= d₁) vertrieben. Es gelangt bevorzugt zum Einsatz.

Charakteristische Beispiele für Antioxidantien aus der Klasse der Phenylendiamine sind die Verbindungen (VI) bis (VII)

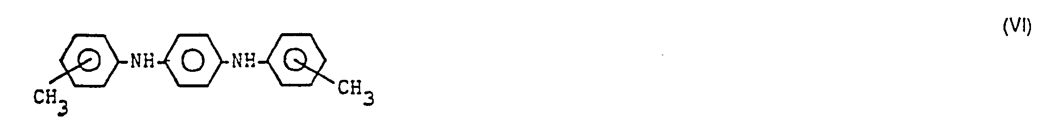

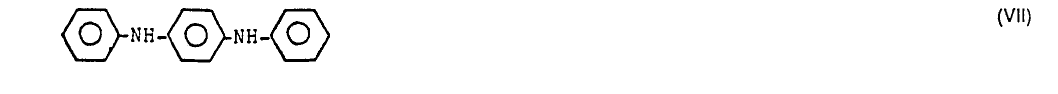

Das Gemisch der Verbindungen (VI) und (VII) wird von Goodyear unter dem Namen Wingstay 100^{(R)} (₇ d₂) vertrieben. Es wird bevorzugt. Demnach gelangen die Antoxidantien (= dᵢ) und (₌ d₂)) Wingsatay L^{(R)} und Wingstay 100^{(R)} aus den Klassen der Phenole und Phenylendiamine bevorzugt zum Einsatz. Bevorzugt werden sie in Mengen von 5 bis 20 Gew.-Teilen besonders bevorzugt in Mengen von 7 bis 16 Gew.-Teilen und ganz besonders bevorzugt in Mengen von 8 bis 15 Gew.-Teilen, jeweils bezogen auf die Komponente A), angewendet.

### Komponente E)

Die erfindungsgemäße Formmasse kann übliche Zusatzstoffe enthalten (Komponente E). Unter dem Begriff Zusatzstoffe werden Füllstoffe, Farbpigmente, Gleitmittel, Weichmacher, Antistatika oder Treibmittel oder weitere metallfreie Synergisten wie Triphenylphosphat und Triphenylphosphinoxid verstanden. Die Anwendung erfolgt in üblichen, dem Fachmann bekannten Mengen.

Die Einarbeitung der Flammschutzmittel, des Synergisten, sowie der ggf. verwendeten Zusatzstoffe, kann nach einem geeigneten und bekannten Mischverfahren, z. B. durch Extrudieren, Kneten oder Walzen erfolgen.

Die erfindungsgemäße Formmasse besitzt neben der Eigenschaft der Selbstverlöschung weitere gute Eigenschaften, wie eine hohe Wärmeformbeständigkeit neben einer guten Kerbschlagzähigkeit und multiaxialen Belastbarkeit. Gerade letzteres ist überraschend, da üblicherweise niedere molekulare Zusatzstoffe, wie gerade die angewendeten Antioxydantien, stark weichmachend wirken können und so die Wärmeformbeständigkeit, Kerbschlagzähigkeit und muftiaxiale Belastbarkeit deutlich verschlechtern können. Noch überraschender ist, daß sich ausgerechnet durch die Anwendung so leicht brennbarer Substanzen, wie dies die Antioxydantien sind, in hohen, bisher im Stand der Technik unbekannten Mengen, ein Flammschutzeffekt resultiert. Daß die erfindungsgemäßen Formmassen vorzüglich gegenüber dem thermooxidativen Abbau stabilisiert sind, versteht sich von selbst.

Die in den Beispielen und Vergleichsversuchen aufgeführten Produkteigenschaften wurden, wie nachfolgend angegeben, bestimmt:

1. Die Flammschutzprüfung erfolgt im vertikalen Brandtest nach den Vorschriften der Underwriter Laboratories zwecks

Einordnung in eine der Brandklassen UL 94 V0, UL 94 V1 oder UL 94 V2 an senkrecht eingespannten Stäben der Abmessungen 127 x 12,7 x 3,16 mm (= 1/8"). Zur genauen Vorschrift sieh Troitzsch, "Brandverhalten von Kunststoffen loc cit".
2. Die Kerbschlagzähigkeit, aₖ, in (kJ/m²) wurde bei 25°C nach DIN 53 453 bestimmt.
3. Die Schlagzähigkeit, aₛ, bei 23°C in (kJ/m²) wurde gleichfalls nach DIN 53 453 bestimmt.
4. Die Wärmeformbeständikeit nach Vicat in (°C) wurde nach DIN 53 460 bestimmt.
5. Die multiaxiale Belastbarkeit bzw. Schädigungsarbeit in (Nm) wurde nach DIN 53 443 durch den Fallrohrtest bestimmt.

Zur Durchführung von Versuchen gemäß der Erfindung und von Vergleichsversuchen wurden folgende Produkte verwendet:
A): unterschiedliche Abmischungen aus
as): einem Styrol/Acrylnitril-Copolymerisat (- SAN) mit 35 % Acrylnitril, VZ - 80 (0,5 %-ig in Dimethylformamid) und
a₁ + a₂): einem Pfropfmischpolymerisat, nämlich 60 % Poly(butadien)kautschuk Komponente a₁), gepfropft mit 40 % Styrol/Acrylnitril im Verhältnis (65/35) Komponente a₂).
Bi): Octabromdiphenylether, verwendet wurde DE 79^{(R)} von Great Lakes.
Ci): Sb₂O₃.
D₁): Wingstay L^{(R)} von Goodyear
D₂): Wingstay 100^{(R)} von Goodyear
Novolak PV 2: ABS-verträglicher Novolak, hergestellt durch Kondensation von o-, m- und p-Kresol und Formaldehyd gemäß 149 815 (5)
TPPA: Triphenylphosphat
TPPI: Triphenylphosphit
Irgafos 168^{(R)}: Tris(2,4-di-t-butylphenyl)phosphat von Ciba Geigy.
Wingstay 29^{(R)}: Antioxydans aus der Klasse der Diphenylamine

Die Erfindung wird nachstehend anhand von Beispielen und Vergleichsversuchen näher erläutert. Die dort genannten Mengenangaben in Gew.-Teilen beziehen sich, sofern nichts anderes vermerkt ist, auf die Masse der Komponente A (= 100).

### Beispiele ₁ bis 3 und Vergleichsversuche A bis G

Die in der Tabelle genannten Mengen der Komponenten an thermoplastischem Harz, Flammschutzmittel, Synergist und Zusatzstoffen wurden in trockener Form gemischt, auf einem Extruder bei 260°C aufgeschmolzen, geknetet und anschließend granuliert. Aus dem Granulat wurden Proben für Formmassen hergestellt, an denen die in der Tabelle aufgeführten Eigenschaften durch Spritzguß bei 250°C bestimmt wurden.

Die Mengenangaben in der Tabelle beziehen sich, sofern nicht ausdrücklich anders angeordnet, auf 100 Gew.-Teile an Komponente A) (a₁ + a₂ = a₃) + 100 Teile.

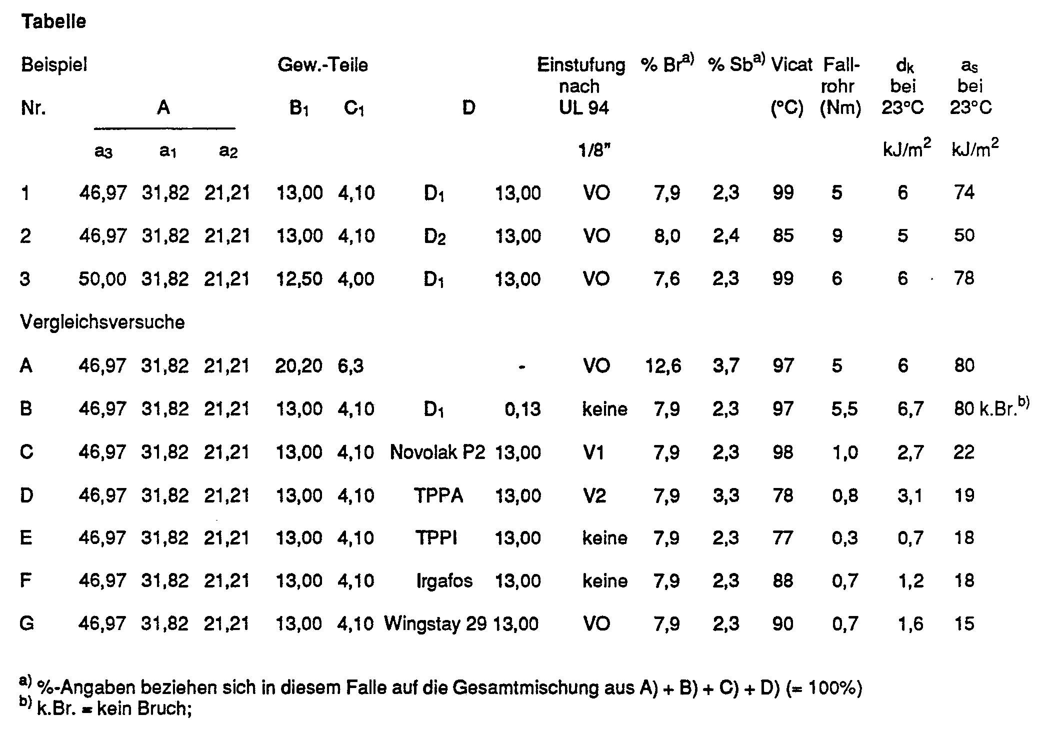

## Patentansprüche

1. Selbstverlöschende thermoplastische Formmasse auf Basis von ABS, enthaltend
A) ein Mischpolymerisat, das gebildet wird aus, jeweils bezogen auf A), a₁) mindestens einem Elastomeren auf Basis von Polybutadien, in einem Anteil von 1 bis 40 Gew.-%, worauf
a₂) 5 bis 40 Gew.-% eines Copolymerisates aus einem vinylaromatischen Monomeren mit 8 bis 9 C-Atomen und aus Acrylnitril (Gewichtsverhältnis vinylaromatisches Monomer/Acrylnitril 40 : 10 bis 60 : 40) gepfropft sind, und
aa) mindestens einem Copolymerisat (Hartmatrix) in einem Anteil von 20 bis 94 Gew.-%, das besteht aus, 50 bis 90 Gew.-%, bezogen auf a3), aus mindestens einem vinylaromatischen Monomeren mit 8 bis 9 C-Atomen und 50 bis 10 Gew.-%, bezogen auf a₃), aus Acrylnitril, enthaltend ferner, bezogen auf jeweils 100 Gew.-Teile von A),
B) 2 bis 20 Gew.-Teile einer Halogen enthaltenden organischen Verbindung (Flammschutzmittel) und
C) 0,5 bis 20 Gew.-Teile einer Metall- oder Nichtmetallverbindung (Synergist), dadurch gekennzeichnet daß die Formmasse zusätzlich 5 bis 20 Gew.-Teile an sich bekannter Antioxydantien,
D), aus der Klasse der sterisch gehinderten Phenole oder der Phenylendiamine enthält.

2. Formmasse, bestehend aus den Komponenten A), B), C) und D).

3. Formmasse auf Basis von ABS, bestehend aus, jeweils bezogen auf A),
A) einem Mischpoymerisat, das gebildet wird aus, a₁) Polybutadien, in einem Anteil von 1 bis 40 Gew.-%, worauf
a₂) 5 bis 40 Gew.-% eines Copolymerisates aus Styrol und Acrylnitril (Gewichtsverhältnis Styrol/Acrylnitril 40 : 10 bis 60 : 40) gepropft sind, und
a₃) mindestens einem Copolymerisat (Hartmatrix) in einem Anteil von 20 bis 94 Gew.-%, das besteht aus, 50 bis 90 Gew.-%., bezogen auf a₃), Styrol und 50 bis 90 Gew.-%, bezogen auf a3), aus Acrylnitril, enthaltend ferner, bezogen auf jeweils 100 Gew.-Teile von A,
B) 2 bis 20 Gew.-Teile einer Halogen enthaltenden organischen Verbindung (Flammschutzmittel)
C) 0,5 bis 20 Gew.-Teilen Sb₂O₃, dadurch gekennzeichnet daß die Formmasse zusätzlich 7 bis 16 Gew.-Teile an sich bekannter Antioxydantien,
D), aus der Klasse der sterisch gehindeten Phenole oder der Phenylendiamine enthält.

4. Formmasse nach Anspruch 1, dadurch gekennzeichnet, daß sie ferner übliche Zusatzstoffe E) aufweist.

5. Verwendung der Formmasse gemäß Anspruch 1 zur Herstellung von Formteilen.

6. Formteile aus Formmassen gemäß Anspruch 1.

## Claims

1. A self-extinguishing thermoplastic molding material based on ABS, containing
A) a copolymer which is formed from (the percentages in each case being based on A),
a₁) one or more elastomers based on polybutadiene, in an amount of from 1 to 40 % by weight, onto which
a₂) from 5 to 40 % by weight of a copolymer of a vinyl aromatic monomer of 8 or 9 carbon atoms and of acrylonitrile (weight ratio of vinyl aromatic monomer to acrylonitrile 40 10 to 60 : 40) are grafted, and
as) one or more copolymers (hard matrix) in an amount of from 20 to 94 % by weight, which consists of from 50 to 90 % by weight, based on a3), of one or more vinyl aromatic monomers of 8 or 9 carbon atoms and from 50 to 10 % by weight, based on a3), of acrylonitrile, and furthermore containing, per 100 parts by weight of A) in each case,
B) from 2 to 20 parts by weight of a halogen-containing organic compound (flameproofing agent) and
C) from 0.5 to 20 parts by weight of a metal or non-metal compound (synergist), wherein the molding material additionally contains from 5 to 20 parts by weight of conventional antioxidants,
D), from the class consisting of the sterically hindered phenols or of the phenylenediamines.

2. A molding material consisting of the components A), B), C), and D).

3. A molding material based on ABS, consisting of (the percentages in each case being based on A),
A) a copolymer which is formed from
a₁) polybutadiene in an amount of from 1 to 40 % by weight, onto which
a₂) from 5 to 40 % by weight of a copolymer of styrene and acrylonitrile (weight ratio of styrene to acrylonitrile from 40 : 10 to 60 : 40) are grafted, and
as) one or more copolymers (hard matrix) in an amount of from 20 to 94 % by weight, which consist of from 50 to 90 % by weight, based on aa), of styrene and from 50 to 90 % by weight, based on as), of acrylonitrile, and furthermore containing, per 100 parts by weight of A in each case,
B) from 2 to 20 parts by weight of a halogen-containing organic compound (flameproofing agent) and
C) from 0.5 to 20 parts by weight of Sb₂0₃, wherein the molding material additionally contains from 7 to 16 parts by weight of conventional antioxidants,
D), from the class consisting of the sterically hindered phenols or of the phenylenediamines.

4. A molding material as claimed in claim 1, which furthermore contains conventional additives E).

5. Use of a molding material as claimed in claim 1 for the production of moldings.

6. A molding obtained from a molding material as claimed in claim 1.

## Revendications

1. Masse à mouler thermoplastique auto-extinguible à base d'ABS, contenant
A) un copolymère qui est formé, à chaque fois par rapport à A),
a₁) d'au moins un élastomère à base de polybutadiène en quantité allant de 1 à 40 % en poids, après quoi
a₂) on greffe 5 a 40 % en poids d'un copolymère d'un monomère vinylaromatique ayant 8 ou 9 atomes de carbone et d'acrylonitrile, le rapport pondéral monomère vinylaromatique/acrylonitrile étant de 40 : 10 à 60 40, et
as) d'au moins un copolymérisat (matrice dure) en quantité allant de 20 à 94 % en poids qui se compose de 50 à 90 % en poids, par rapport à as), d'au moins un monomère vinylaromatique ayant 8 ou 9 atomes de carbone et 50 à 10 % en poids, par rapport à a3), d'acrylonitrile, contenant en outre, par rapport à chaque fois a 100 parties en poids de A),
B) 2 à 20 parties en poids d'un composé organique halogéné (agent anti-flammes, et
C) 0,5 à 20 parties en poids d'un composé métallique ou non métallique (agent de synergie), caractérisée en ce que la masse à mouler contient en plus de 5 à 20 parties en poids d'antioxydants D connus en eux-mêmes de la classe des phénols stériquement encombrés ou des phénylènediamines.

2. Masse à mouler constituée des composants A), B), C) et D).

3. Masse à mouler à base de ABS, constituée de, à chaque fois par rapport à A),
A) un copolymère qui est formé de
a₁) polybutadiène en quantité allant de 1 à 40 % en poids, après quoi
a₂) on greffe 5 à 40 % en poids d'un copolymère de styrène et d'acrylonitrile, le rapport pondéral styrè- ne/acrylonitrile étant de 40:10 à 60 : 40, et
as) au moins un copolymère (matrice dure) en quantité allant de 20 à 94 % en poids qui se compose de 50 à 90 % en poids, par rapport à a₃), de styrène et 50 à 90 % en poids, par rapport à as), d'acrylonitrile, contenant en outre par rapport à chaque fois à 100 parties en poids de A),
B) 2 à 20 parties en poids d'un composé organique halogéné (agent anti-flammes),
C) 0,5 à 20 parties en poids de Sb₂O₃, caractérisée en ce que la masse à mouler contient en plus 7 à 16 parties en poids d'antioxydants D) connus en eux-mêmes de la classe des phénols stériquement encombrés ou des phénylènediamines.

4. Masse à mouler selon la revendication 1, caractérisée en ce qu'elle contient de plus des additifs E) classiques.

5. Utilisation de la masse à mouler selon la revendication 1 pour la préparation de pièces moulées.

6. Pièces moulées à partir de masses à mouler selon la revendication 1.
